# EUROPEAN PATENT APPLICATION

(11) **EP 2 112 048 A2**
(43) Date of publication of application: **28.10.2009**
(21) Application number: 09158343.5
(22) Date of filing: 21.04.2009
(51) Int. Cl.: B62B 1/22

(54) **Wheelbarrow**

(30) Priority: 21.04.2008 US 46557 P
(71) Applicant: Lifetime Products, Inc., Clearfield, UT 84016 (US)
(72) Inventor: Winter, David C, Layton, UT 84040 (US); Boydston, Kevin, Clinton, UT 84015 (US); Astle, Robert A, Farmington, UT 84025 (US); Larsen, Jered, Bountiful, UT 84010 (US); Nye, S. Curtis, Clinton, UT 84015 (US)
(74) Representative: Browne, Robin Forsythe

(57) **Abstract**

A wheelbarrow may include a receiving or load carrying portion, such as a tub or container, and wheels. The wheels are preferably disposed proximate a central portion of the tub. The wheelbarrow may also include a frame with a base or platform, which may connect the wheels and load carrying portion. In addition, the wheelbarrow may include a handle that is connected to the base or platform. A substantial portion or the capacity of the tub may be disposed below the handle and/or a substantial portion of the capacity of the tub may be disposed above the handle, which may help increase the stability and/or load capacity of the wheelbarrow. The frame may also include a front dump roll cage, which may be connected to the base or platform. The front dump roll cage may help support the tub, may help provide more stable dumping and/or may help protect the tub from damage

## Description

### BACKGROUND OF THE INVENTION

### Field of the Invention

The present invention generally relates to storage and/or transportation systems and, in particular, to wheelbarrows.

### Description of Related Art

A conventional wheelbarrow is a small, hand-propelled vehicle that is designed to be pushed and guided by a user. A standard wheelbarrow usually includes a front wheel and two handles that are grasped by the user. Conventional wheelbarrows may be used to lift and move various objects, materials, loads, etc. Conventional wheelbarrows distribute the weight of its load between the wheel and the user, which may enable the user to transport heavier and bulkier loads than would be possible if the weight were entirely carried by the user.

Many known wheelbarrows tend to be unstable and have a tendency to tip over during use. Conventional wheelbarrows may also be unsteady or wobbly when being used, especially if the wheelbarrow is loaded in an unbalanced matter. In addition, many known wheelbarrows are difficult to use when lifting or moving heavier loads. For example, conventional wheelbarrows may require a significant amount of lifting and effort by the user when moving heavier loads, which may result in injury to the user. Moreover, some conventional wheelbarrows may be unstable when at rest. In particular, some wheelbarrows may be easy to tip over when fully or partially loaded. Further, some conventional wheelbarrows have relatively short life expectancies because they may be easily damaged or broken.

Standard wheelbarrows may also be difficult to use when moving large objects. For example, if the load to be moved is larger than the load carrying portion of the wheelbarrow, then the load may be very difficult or impossible to move. In addition, if the load extends beyond the sides ofthe load carrying portion of the wheelbarrow, then many conventional wheelbarrows may easily tip over.

### BRIEF SUMMARY OF EMBODIMENTS OF THE INVENTION

A need therefore exists for a wheelbarrow that eliminates or reduces some or all of the above-described disadvantages and problems.

One aspect is a wheelbarrow that may include various parts and components, such as wheels, handles and a receiving or load carrying portion. The receiving or load carrying portion, which may include or consist of a tub or container, may be sized and configured to receive materials, supplies, equipment and the like.

Advantageously, the wheelbarrow may be sized and configured to receive and/or retain a variety of different types of items, objects or things, which may have various shapes, sizes, configurations and arrangements. It will be appreciated that the wheelbarrow may have different shapes, sizes, configurations and arrangements depending, for example, upon the intended use of the wheelbarrow. The wheelbarrow may also be used for a number of different purposes such as transporting, storing, mixing, separating, etc.

The wheelbarrow may also be disposed in one or more positions. For example, the wheelbarrow may be disposed in a fixed or stationary position in which the wheelbarrow is at rest. The wheelbarrow may also be disposed in a use position in which the wheelbarrow may be moved by rolling it on its wheels. The wheelbarrow may further be disposed in one or more loading and/or dumping positions, which may be referred to as a dumping position but it will be understood that the wheelbarrow may also be loaded in that position, if desired. For instance, the wheelbarrow may be disposed in a first dumping position in which a portion of the wheelbarrow engages a support surface, such as the ground or floor, and a front portion of the load carrying portion is disposed a first distance from the ground. In this position, the wheels may still touch the ground. The wheelbarrow may also be disposed in a second dumping position in which the front portion of the load carrying portion is disposed a second distance from the ground and the wheels may no longer touch the ground. The wheelbarrow may further be disposed in a third dumping position in which the front portion of the wheelbarrow touches the ground and the wheels may be spaced apart from the ground. Because the wheelbarrow may be disposed in one or more dumping positions, that may facilitate use of the wheelbarrow.

Another aspect is a wheelbarrow that may include a receiving or load carrying portion that is sized and configured to receive a large amount of materials. For example, the loading carrying portion may have a large depth to facilitate receiving a large amount of materials. For instance, the tub may have a depth that is generally equal to its width. The tub could also have a width that is larger or smaller than the depth of the tub.

Still another aspect is a wheelbarrow that may include a low center of gravity. For example, the lower portion of the tub may be disposed proximate the axle. In addition, the tub may include tapered or inwardly angled sides, which may direct at least a portion of the load towards the center of the tub, which may increase the stability of the wheelbarrow. A portion of the tub may also be disposed between the wheels, which may also lower the center of gravity and increase the stability of the wheelbarrow. In greater detail, the lower portion of the tub may be disposed proximate the axle and the width of the lower portion of the tub may extend almost the entire distance between the wheels. This may allow, for example, a large amount of the load to be disposed between the wheels.

Yet another aspect is a wheelbarrow that may include a tub with a lower portion that is disposed between the wheels. The tub may also include sidewalls that are disposed proximate the interior portion of the wheels. The upper portion of the tub may then be enlarged and/or angled outwardly. That is, the tub may include recessed portions that are sized and configured to receive the wheels.

A further aspect is a wheelbarrow that may include a tub with a lower portion that is disposed between the wheels and an upper portion that is generally aligned with the wheels. For example, the lower portion of the tub may be disposed proximate the axle and the inner surface of the wheels. The upper portion of the tub may be aligned with a portion of the wheels, such as the outer surface ofthe wheels, the center portion ofthe wheels, and the like.

A still further aspect is a wheelbarrow that may include a frame. The frame may be sized and configured to help support the load carrying portion, such as the tub, which may allow the wheelbarrow to support a larger load. The frame may also facilitate connection of the load carrying portion to the wheels. In addition, the frame may be used to attach one or more handles to the wheelbarrow.

Yet another further aspect is a wheelbarrow that may be easy to use. For example, the wheelbarrow may include an engaging portion that engages a support surface, such as the floor or ground. If the engaging portion is spaced apart from the load carrying portion, then it may prevent the load carrying portion from impacting the support surface, which may help prevent damage to the wheelbarrow. The engaging portion may also be spaced from the load carrying portion a distance to allow the load carrying portion to deform or bend slightly. The engaging portion is preferably sized and configured to allow the wheelbarrow to be tipped forwardly to facilitate removal of items and/or materials from the wheelbarrow. The engaging portion is also preferably sized and configured such that it is generally vertically aligned with the front of the load carrying portion when the wheelbarrow is in a receiving position. The engaging portion may also be horizontally aligned with the front of the load carrying portion when the wheelbarrow is in a dumping position. Advantageously, the engaging portion may be part ofthe frame.

Another aspect is a wheelbarrow that may include wheels that arc disposed proximate the middle portion of the load carrying portion. For example, the wheels may be centered and/or equidistant from the front and rear portions of the load carrying portion. This may allow the wheels to be sized and configured to support a larger portion of the load, rather than the user, when the wheelbarrow is being used. That is, when the wheelbarrow is being used, more of the load may be support by the wheels and not the user. This may allow greater loads to be carried and may make the wheelbarrow easier to use. In addition, this may allow the wheelbarrow to be more easily moved between the normal, use and dumping positions.

Yet another aspect is a wheelbarrow that may include wheels that are separated by a greater distance. Advantageously, if the wheels are separated by a greater distance, then the wheelbarrow wheels may have a wider stance and that may provide the wheelbarrow with greater stability when the wheelbarrow is at rest and/or in motion. For example, the wheels may be spaced apart at least about two feet and/or at least about the width of the load carrying portion. If desired, the wheels could also be spaced apart wider than the width of the tub.

Still another aspect is a wheelbarrow that may include a frame that is sized and configured to support the load carrying portion. The load carrying portion may be positioned below, between and/or above portions of the frame, which may increase the stability and/or load capacity of the wheelbarrow. For example, a first portion of the load carrying portion may be disposed below the frame, a second portion may be disposed between one or more portions of the frame, and a third potion may be disposed above the frame. The frame may help create a strong, sturdy and/or rigid wheelbarrow. Additionally, the frame may help protect the wheelbarrow from damage. For instance, the frame may help prevent the tub from being dented, scratched, punctured or pierced. The frame may also allow the wheelbarrow to be more quickly repaired. For example, the frame may allow the load carrying portion to be replaced. In addition, one or more portions of the frame may be replaceable, which may increase the life of the wheelbarrow.

A further aspect is a wheelbarrow that may include a load carrying portion, with a contoured or tapered pour spout. Desirably, the contoured or tapered pour spout may help provide more accurate dumping of the load. In addition, the contoured spout may allow the wheelbarrow to have higher sides. The contoured spout may be particularly useful when moving materials such as wet concrete or other types of pourable materials. The front surface of the contoured spout is preferably generally aligned with the front portion of the frame, which may help protect the spout from damage and facilitate dumping of the wheelbarrow. The spout could also extend forwardly beyond the frame or be disposed behind the frame, if desired.

A still further aspect is a wheelbarrow that may include a tub or container with one or more molded features. For example, the tub or container may be made of molded plastic and may include one or more features such as a measuring stick, a graduated tub capacity, garden conversions and guides, construction conversions and guides, stake pockets (e.g., for extending capacity for bulky items), a tool holder bin, a cup holder, and/or the like. These and other features may be integrally formed in the tub or container during the molding process as part of a unitary, one-piece structure.

Another aspect is a wheelbarrow that may include a tub, a frame, a first wheel disposed at least proximate a central portion of the tub and a second wheel disposed at least proximate the central portion of the tub. The frame may include a platform that is connected to the tub and/or wheels. The wheelbarrow may also include a handle that is connected to the frame. In particular, the wheelbarrow may include two handles that are separated by a distance and connected to opposing sides ofthe frame. The handles may be aligned with the wheels and/or the sides of the tub. Additionally, the handles may be connected to and/or offset from the platform of the frame. In greater detail, the handles may include a first portion that is connected to the frame and a second portion that is generally aligned with the wheels and/or the sides of the tub. The first portion of the handles may be aligned with the axle and the second portion of the handles may extend beyond the top surface of the tub.

Still another aspect is a wheelbarrow that may include a frame or support structure with an engaging portion such as a front dump roll cage. The roll cage may help support the tub and/or may help provide more stable dumping. The roll cage may also help protect the tub from damage. For example, the roll cage may include a lower portion that is generally aligned with a lower portion ofthe tub and an upwardly extending portion that is generally aligned with the front portion of the tub. Advantageously, the front roll cage may allow the wheelbarrow to be positioned in different dumping positions. For instance, in a first position, only a portion of the front roll cage may contact the support surface and the load carrying portion may be disposed at a first angle, which may facilitate loading and/or unloading of the wheelbarrow because the front portion of the load carrying portion may be disposed proximate but spaced apart from the ground. In a second position, the front roll cage may engage the support surface and the front portion of the load carrying portion of the wheelbarrow may be disposed closer to the ground. In particular, the front roll cage may include a generally planar section and the wheelbarrow may be disposed on the generally planar section. In this position, the front wall of the load carrying portion may be disposed generally parallel to the support surface. In a third position, a front portion of the roll cage may engage the support surface and the front portion of the load carrying portion may engage the support surface. Thus, the front roll cage may allow the wheelbarrow to be positioned in plurality of different configurations, which may facilitate loading and/or unloading ofthe wheelbarrow.

Yet another aspect is a wheelbarrow that may include a frame with a rear support member that is sized and configured to contact a support surface when the wheelbarrow is in the normal or stationary position. The rear support member preferably extends rearwardly from frame and it may extend beyond the outer edge of the load carrying portion. Advantageously, the rear support member may allow the wheelbarrow to remain in a steady, generally fixed position when it is being loaded and/or unloaded. If desired, the front roll cage and the rear support member may have generally the same size, shape, configuration and arrangement, except the front roll cage may extend upwardly and the rear support member may extend downwardly. This may help create a wheelbarrow with improved aesthetics because a symmetrical appearance may be created. In addition, one or more parts of the front roll cage and rear support member may be interchangeable. The front roll cage and rear support member, however, do not have to be interchangeable and may have a variety of suitable shapes, sizes, configurations and arrangements depending, for example, upon the intended use of the wheelbarrow.

A further aspect is a wheelbarrow that may include a tub, at least one wheel, and a frame that may include a base connected to the tub, a handle connected to the base and a front dump roll cage connected to the base. The front dump roll cage may extend in a generally upward direction relative to the base. The wheelbarrow may be configured to move to a dumping position in which the front dump roll cage contacts a support surface. The front dump roll cage may be configured to space the tub at least a substantial distance apart from the support surface when the wheelbarrow is in the dumping position.

A still further aspect is a wheelbarrow that may include a tub, at least one wheel, and a frame that may include a base connected to the tub, a handle connected to the base and a generally U-shaped front dump roll cage connected to the base. The generally U-shaped front dump roll cage may abut the support surface when the wheelbarrow is in a dumping position.

Another aspect is a wheelbarrow that may comprise a load carrying portion; a frame that is sized and configured to support at least a portion of the load carrying portion, the frame including a base with a first support member disposed proximate a first side of the load carrying portion and a second support member disposed proximate a second side of the load carrying portion; a front dump roll cage connected to the frame and extending forwardly from the base, the front dump roll cage being spaced apart from the load carrying portion by a distance, the front dump roll cage being generally aligned with a front portion of the load carrying portion, the front dump roll cage being sized and configured to contact a support surface and support the wheelbarrow when the wheelbarrow is in a dumping position; an axle connected to the frame, the axle being disposed at least proximate a center ofthe base; a first wheel attached to a first end of the axle; a second wheel attached to a second end of the axle; a handle connected to the frame; and a rear stand connected to the frame, the rear stand including an engagement surface that is sized and configured to engage the support surface when the wheelbarrow is in a normal position.

Still another aspect is a wheelbarrow that may include a first dumping position in which a first portion of the front dump roll cage contacts the support surface and a front portion of the load carrying portion is disposed a first distance away from the support surface, a second dumping position in which a second portion of the front dump roll cage contacts the support surface and the front portion of the load carrying portion is disposed a second distance away from the support surface, and a third dumping position in which a third portion of the front dump roll cage contacts the support surface and the front portion of the load carrying portion is disposed a third distance away from the support surface. The third distance may be less than the second distance and the second distance is less than the first distance, if desired.

Yet another aspect is a wheelbarrow that may include a first portion of the load carrying portion that is disposed above the first support member and the second support member of the base, a second portion of the load carrying portion that is disposed between the first support member and the second support member of the base, and a third portion of the load carrying portion that is disposed below the first support member and the second support member of the base. In addition, the front dump roll cage may be spaced apart from the load carrying portion by at least about four inches. The front dump roll cage may also have a generally U-shaped configuration and be spaced apart from the load carrying portion by a generally constant distance. Further, at least a portion of the handle may be aligned with an axis and the axis intersects a portion of the axle.

A further aspect is a wheelbarrow that may comprise a load carrying portion; a frame connected to the load carrying portion, the frame including a base; a handle connected to the frame; a front dump roll cage extending forwardly from the base, the front dump roll cage being sized and configured to contact a support surface and support the wheelbarrow when the wheelbarrow is in a dumping position, the front dump roll cage being sized and configured to space the load carrying portion at least a substantial distance apart from the support surface when the wheelbarrow is in the dumping position; and at least one wheel connected to the frame. The wheelbarrow may also include a rear stand that extends rearwardly from the base, and the front dump roll cage and the rear stand may have a generally U-shaped configuration.

A still further aspect is a wheelbarrow that may comprise a load carrying portion; a frame including a base connected to the load carrying portion; a handle connected to the frame; a front dump roll cage extending upwardly and forwardly from the base of the frame, the front dump roll cage being sized and configured to contact a support surface and support the wheelbarrow when the wheelbarrow is in a dumping position, the front dump roll cage being spaced apart from a front portion of the load carrying portion by a distance; and at least one wheel connected to the frame. The front dump roll cage may be sized and configured to space the load carrying portion apart from the support surface by at least about four inches when the wheelbarrow is in the dumping position. The front dump roll cage may also be sized and configured to space the load carrying portion apart from the support surface by at least about six inches when the wheelbarrow is in the dumping position.

Another further aspect is a wheelbarrow that may include a first wheel disposed at least proximate a central portion of the load carrying portion and a second wheel disposed at least proximate the central portion of the load carrying portion. The wheelbarrow may also include a handle and at least a portion of the handle may be aligned with an axis that is offset from the base. In addition, the wheelbarrow may have a load carrying portion with a capacity and a portion of the capacity of the load carrying portion may be disposed below the frame and a portion of the capacity of the load carrying portion being disposed above the frame. The wheelbarrow may further have a capacity and at least about five litres of the capacity of the load carrying portion may be disposed below the frame and at least about five litres of the capacity of the load carrying portion is disposed above the frame.

These and other aspects, features and advantages of the present invention will become more fully apparent from the following detailed description of preferred embodiments and appended claims.

### BRIEF DESCRIPTION OF THE DRAWINGS

The appended drawings contain figures of preferred embodiments to further illustrate and clarify the above and other aspects, advantages and features of the present invention. It will be appreciated that these drawings depict only preferred embodiments of the invention and are not intended to limit its scope. The invention will be described and explained with additional specificity and detail through the use of the accompanying drawings in which:
Figure 1 is a perspective view of an exemplary wheelbarrow;
Figure 2 is a front view of the wheelbarrow shown in Figure 1;
Figure 3 is a perspective view of a portion of the wheelbarrow shown in Figure 1, illustrating an exemplary frame and axle;
Figure 4 is a right side view of the wheelbarrow shown in Figure 1;
Figure 5 is a left side view of the wheelbarrow shown in Figure 4;
Figure 6 is a right side view of the wheelbarrow shown in Figure 4, illustrating the wheelbarrow in a first loading and/or unloading position; and
Figure 7 is a right side view of the wheelbarrow shown in Figure 6, illustrating the wheelbarrow in a second loading and/or unloading position.

### DETAILED DESCRIPTION OF THE PREFERRED EMBODIMENTS

The present invention is generally directed towards storage and/or transportation systems and, in particular, to wheelbarrows. The principles of the present invention, however, are not limited to wheelbarrows. It will be understood that, in light of the present disclosure, the wheelbarrow disclosed herein can be successfully used in connection with other types of storage and/or transportation systems.

Additionally, to assist in the description of the wheelbarrow, words such as top, bottom, front, rear, right and left may be used to describe the accompanying figures, which are not necessarily drawn to scale. It will be appreciated, however, that the wheelbarrow can be located in a variety of desired positions and/or orientations. A detailed description of the wheelbarrow now follows.

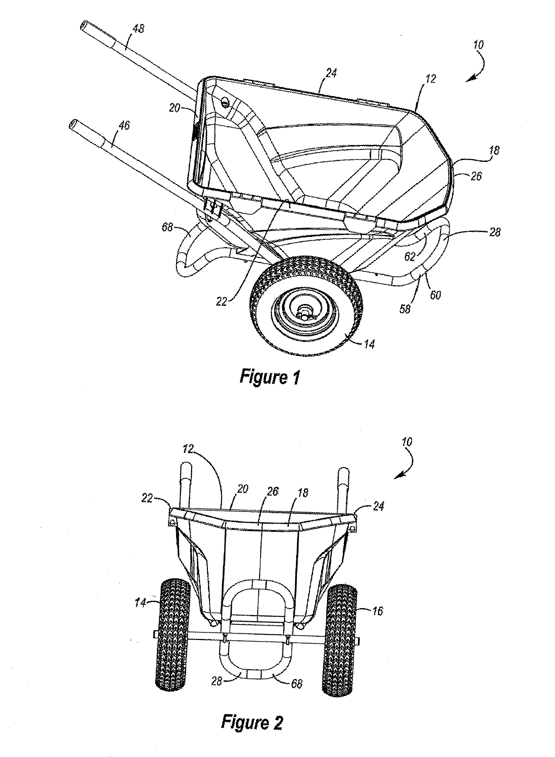

As shown in Figures 1-2, a wheelbarrow 10 may include a load carrying portion 12, such as a tub or container, and one or more wheels 14, 16. The wheels 14, 16 may be sized and configured to support a larger portion of the load. For instance, the wheels 14, 16 may be shifted away from the front of the wheelbarrow 10 and towards the rear of the wheelbarrow. Thus, when the wheelbarrow 10 is being used, more of the load may be support by the wheels 14, 16 and not the user. This may allow greater loads to be carried and may make the wheelbarrow 10 easier to use.

In further detail, the tub 12 may include a front portion 18, a rear portion 20 and side portions 22, 24. The wheels 14, 16 may be spaced apart from the front and rear portions 18, 20 and disposed proximate a central portion ofthe tub 12. Significantly, when the wheels 14, 16 are disposed proximate a central portion ofthe tub 12, this may allow the wheelbarrow 10 to bear a greater portion of a load. In addition, if the wheels 14, 16 are disposed proximate the central portion of the tub, it may be easier to lift and/or carry a load. The wheels 14, 16, however, need not be disposed proximate the central portion of the tub 12 and may be disposed at the front portion 18, the rear portion 20 or any other suitable location.

As shown in Figure 2, the wheels 14, 16 may be separated by a greater distance. Advantageously, if the wheels 14, 16 are separated by a greater distance, then the wheels may have a wider stance and that may provide the wheelbarrow 10 with greater stability when the wheelbarrow is at rest and/or in motion. For example, the wheels 14, 16 may be spaced apart at least about two feet and/or at least about the width of the tub 12. If desired, the wheels 14, 16 could also be spaced apart wider than the width of the tub 12 or in any other relative position, whether closer or farther apart.

The front portion 18 of the tub 12 may include a contoured or tapered pour spout 26. Desirably, the contoured spout 26 may help provide more accurate dumping of the load. In addition, the contoured spout 26 may allow the tub 12 to have higher sides. The contoured spout 26 may be particularly useful when moving materials such as wet concrete or other types of pourable materials.

The tub 12 may include one or more molded features. For example, the tub 12 may be made of molded plastic and may include a measuring stick, a graduated tub capacity, garden conversions and guides, construction conversions and guides, stake pockets (*e.g.,* for extending capacity for bulky items), a tool holder bin, a cup holder, and/or other features that may be integrally formed in the tub or container during the molding process. In particular, if the tub 12 is constructed from materials such as molded plastic, then the wheelbarrow 10 may include one or more features that are integrally formed in the molded plastic as part of a unitary one-piece structure. These and other features, however, do not have to be integrally molded, do not have to be part of the tub 12 and do not have to be part of a one-piece structure. Moreover, the tub 12 need not be molded or constructed from plastic and may be constructed using other suitable processes and/or materials.

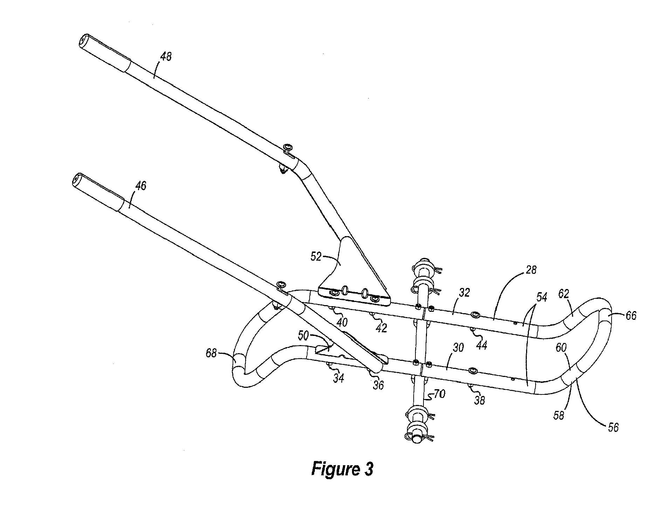

As shown in Figures 3-5, the wheelbarrow 10 may include a frame 28 that is sized and configured to support the tub 12. Desirably, the frame 28 may also help create a strong, sturdy and/or rigid wheelbarrow 10.

The tub 12 may be connected to the frame 28. In particular, the frame 28 may include elongated supports 30, 32 and the tub 12 may be connected to the supports using fasteners 34, 36, 38, 40, 42, 44. For instance, the tub 12 and the supports 30, 32 may include openings, and the fasteners 34, 36, 38, 40, 42, 44 may be inserted through the openings to connect the tub to the frame 28.

The frame 28 may also include elongated handles 46, 48 sized and configured to be grasped by the user. In further detail, the handles 46, 48 may be connected to the brackets 50, 52, and the brackets may be connected to the supports 30, 32 using the fasteners 34, 36, 40, 42. In particular, the brackets 50, 52 and the supports 30, 32 may include openings, and the fasteners 34, 36, 40, 42 may be inserted through the openings to connect the handles 46, 48 to the frame 28. It will be appreciated, however, that the fasteners 34, 36, 38, 40, 42, 44 and the brackets 50, 52 arc not required and that the tub 12, the frame 28 and/or the handles 46, 48 may be interconnected using one or more fasteners, brackets, welds, adhesives and/or other suitable means.

As shown in Figure 3, the supports 30, 32 may form at least a portion of a base or platform 54 that supports the tub 12, and the handles 46, 48 may generally extend in an offset direction relative to the base, such as, at an angle relative to the base. For example, the handles 46, 48 may generally extend at an angle that is between about twenty to fifty degrees relative to the base 54. The handles 46, 48, however, may generally extend at greater or lesser angles relative to the base 54. As discussed below, because the handles 46, 48 generally extend at an angle from the base 54, the wheelbarrow 10 may have a lower center of gravity, thus increasing the stability of the wheelbarrow.

In further detail, with the handles 46, 48 of the frame 28 generally extending at an angle from the base 54 of the frame, portions of the tub 12 may be disposed above, between and/or below the frame 28, which may increase the stability and/or load capacity of the wheelbarrow 10. For example, a first portion of the tub 12 may be disposed above a portion of the handles 46, 48, a second portion of the tub may be disposed between the handles 46, 48, and/or a third portion of the tub may be disposed below the handles 46, 48. With the third portion of the tub 12 below disposed below the handles 46, 48, a substantial portion of the capacity of the tub 12 may be disposed below the handles. For example, at least about one, two, three, four, five, ten, fifteen or more liters of the wheelbarrow's capacity may be disposed below the handles 46, 48. With a substantial portion of the capacity of the tub 12 disposed below the handles 46, 48, this may increase the stability and/or load capacity of the wheelbarrow 10. If desired, a substantial portion of the capacity of the tub 12 may be disposed above the handles 46, 48. For example, at least about one, two, three, four, five, ten, fifteen or more liters of the wheelbarrow's capacity may be disposed above the handles 46, 48.

The frame 28 may advantageously help protect the wheelbarrow 10 from damage. In particular, the frame 28 may help prevent the tub 12 from being dented, scratched, punctured or pierced. For example, the frame 28 may include a front dump roll cage 56, which may help support the tub 12 and may help provide more stable dumping and may also help protect the tub from damage.

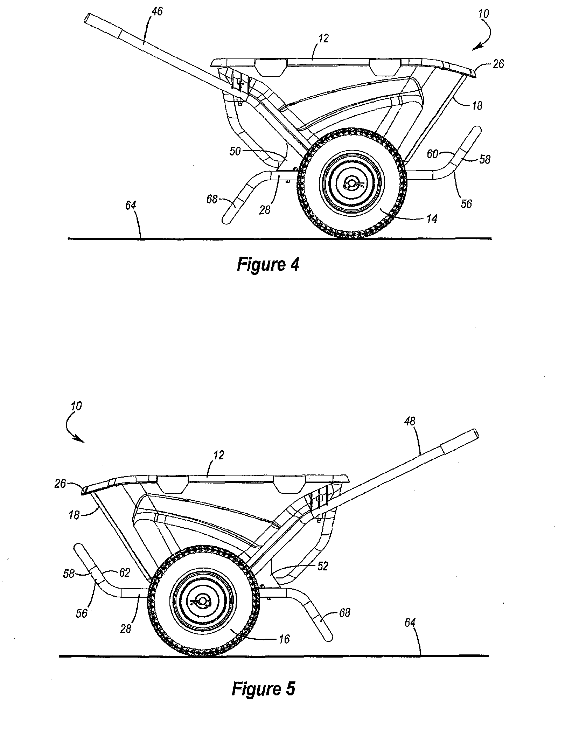

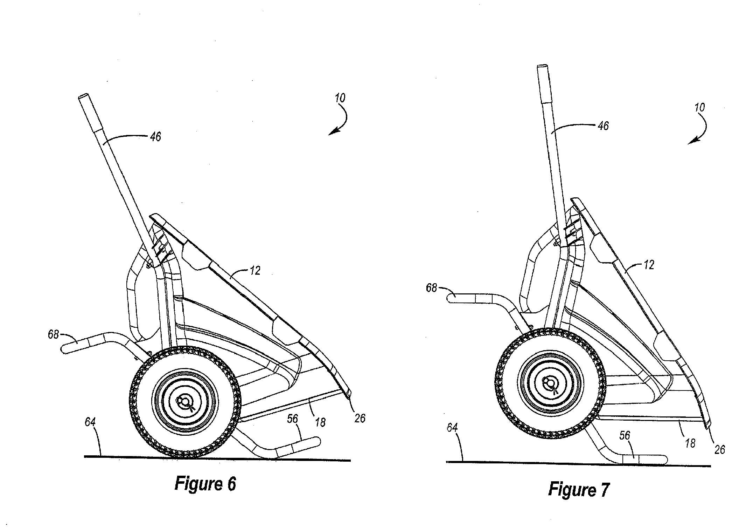

In further detail, as the user tilts the wheelbarrow 10 forward to dump the contents of the tub 12, the wheelbarrow may roll onto the front dump roll cage 56, as shown in Figures 6-7. As shown in Figure 3, the front dump roll cage 56 may include a support structure 58, which may include a pair of elongated supports 60, 62. As shown in Figures 4-5, the support structure 58 and/or supports 60, 62 may be spaced apart from and/or generally aligned with the tub's front portion 18 and/or spout 26. Significantly, if the support structure 58 and/or the supports 60, 62 are spaced apart from the front portion 18 and/or spout 26, the front dump roll cage 56 may help prevent damage to the tub 12 as the wheelbarrow 10 is rolled onto the front dump roll cage. For example, as shown in Figure 7, because the support structure 58 and/or the supports 60, 62 are spaced apart from the front portion 18 and/or spout 26, the tub 12 may be spaced apart from a support surface 64, such as the ground, during dumping. This may advantageously prevent the tub 12 from inadvertently contacting, and being damaged by, the support surface 64. If desired, the support structure 58 and/or the supports 60, 62 may be spaced apart from the front portion 18 and/or spout 26 by a gap of at least about two, three, four, five, six, twelve or more inches, which may help space the front portion 18 and/or spout 26 of the tub 12 apart from the support surface 64 by at least about two, three, four, five, six, twelve or more inches.

In addition, the support structure 58 and/or the supports 60, 62 may generally extend in an offset direction relative to the base 54, such as, at an angle relative to the base. For example, the support structure 58 and/or the supports 60, 62 may generally extend upwardly at an angle that is between about thirty to seventy degrees relative to the base 54. The support structure 58 and/or the supports 60, 62, however, may generally extend at greater or lesser angles relative to the base 54.

As shown in Figure 3 the supports 60, 62 may be spaced apart from each other. Because the supports 60, 62 may be spaced apart from each other, the support structure 58 may have a wider base that may help provide more stable dumping as the wheelbarrow is rolled onto the front dump roll cage 56.

The support structure 58 of the front dump roll cage 56 may also include an intermediate support 66, which may extend between and/or be connected to the supports 60, 62. The supports 60, 62, 66 may help form part of a generally U-shaped support structure 58.

As shown in Figure 3, the frame 28 may include a rear stand 68, which may help prevent the wheelbarrow 10 from over-rotating rearwardly. In addition, the wheelbarrow 10 may rest on the rear stand 68, which may allow the wheelbarrow to be generally stable at rest. If desired, the rear stand 68 may be at least substantially interchangeable with the support structure 58 of the front dump roll cage 56. For example, the support structure 58 and the rear stand 68 may have generally U-shaped configurations that may be at least substantially interchangeable. Significantly, this interchangeability may help reduce the manufacturing costs for the wheelbarrow 10. It will be appreciated, however, that the support structure 58 and/or the rear stand 68 do not require generally U-shaped configurations, could have other suitable configurations and shapes and need not be interchangeable. As shown in Figure 3, the wheelbarrow 10 may include an axle 70, which may disposed proximate a central portion of the frame 28. Significantly, when the axle 70 is disposed proximate a central portion of the frame 28, this may allow the wheelbarrow 10 to bear a greater portion of a load. In addition, if the axle 70 is disposed proximate a central portion of the frame 28, it may be easier to lift and/or carry a load. The axle 70, however, need not be disposed proximate the central portion of the frame 28 and may be disposed at any other suitable location.

If desired, one or more components of the wheelbarrow 10 may be constructed from metal. For example, the frame 28; the supports 30, 32; the handles 46, 48; the front dump roll cage 56; the support structure 58 and/or the supports 60, 62, 66 may be constructed from metal tubes. In addition, the brackets 50, 52 may be constructed from metal plates. Significantly, these metal components may be relatively strong. In addition, the components constructed from metal tubes may be relatively lightweight. It will be appreciated, however, that these components need not be constructed from metal and could be constructed from any suitable material.

Although this invention has been described in terms of certain preferred embodiments, other embodiments apparent to those of ordinary skill in the art are also within the scope of this invention. Accordingly, the scope of the invention is intended to be defined only by the claims which follow.

## Claims

1. A wheelbarrow comprising:
a load carrying portion;
a frame that is sized and configured to support at least a portion of the load carrying portion, the frame including a base with a first support member disposed proximate a first side of the load carrying portion and a second support member disposed proximate a second side of the load carrying portion;
a front dump roll cage connected to the frame and extending forwardly from the base, the front dump roll cage being spaced apart from the load carrying portion by a distance, the front dump roll cage being generally aligned with a front portion of the load carrying portion, the front dump roll cage being sized and configured to contact a support surface and support the wheelbarrow when the wheelbarrow is in a dumping position;
an axle connected to the frame, the axle being disposed at least proximate a center of the base;
a first wheel attached to a first end of the axle;
a second wheel attached to a second end of the axle;
a handle connected to the frame; and
a rear stand connected to the frame, the rear stand including an engagement surface that is sized and configured to engage the support surface when the wheelbarrow is in a normal position.

2. The wheelbarrow as in claim 1, wherein the wheelbarrow includes a first dumping position in which a first portion of the front dump roll cage contacts the support surface and a front portion of the load carrying portion is disposed a first distance away from the support surface;
wherein the wheelbarrow includes a second dumping position in which a second portion of the front dump roll cage contacts the support surface and the front portion of the load carrying portion is disposed a second distance away from the support surface; and
wherein the wheelbarrow includes a third dumping position in which a third portion of the front dump roll cage contacts the support surface and the front portion of the load carrying portion is disposed a third distance away from the support surface.

3. The wheelbarrow as in claim 2, wherein the third distance is less than the second distance and the second distance is less than the first distance.

4. The wheelbarrow as in any preceding claim, wherein a first portion of the load carrying portion is disposed above the first support member and the second support member of the base, a second portion or the load carrying portion is disposed between the first support member and the second support member of the base, and a third portion of the load carrying portion is disposed below the first support member and the second support member of the base.

5. The wheelbarrow as in any preceding claim, wherein the front dump roll cage is spaced apart from the load carrying portion by at least about four inches.

6. The wheelbarrow as in any preceding claim, wherein the front dump roll cage has a generally U-shaped configuration and is spaced apart from the load carrying portion by a generally constant distance.

7. The wheelbarrow as in any preceding claim, wherein at least a portion of the handle is aligned with an axis and the axis intersects a portion of the axle.

8. A wheelbarrow comprising:
a load carrying portion;
a frame connected to the load carrying portion, the frame including a base;
a handle connected to the frame;
a front dump roll cage extending forwardly from the base, the front dump roll cage being sized and configured to contact a support surface and support the wheelbarrow when the wheelbarrow is in a dumping position, the front dump roll cage being sized and configured to space the load carrying portion at least a substantial distance apart from the support surface when the wheelbarrow is in the dumping position; and
at least one wheel connected to the frame.

9. The wheelbarrow as in claim 8, further comprising a rear stand extending rearwardly from the base, the front dump roll cage and the rear stand having a generally U-shaped configuration.

10. A wheelbarrow comprising:
a load carrying portion;
a frame including a base connected to the load carrying portion;
a handle connected to the frame;
a front dump roll cage extending upwardly and forwardly from the base of the frame, the front dump roll cage being sized and configured to contact a support surface and support the wheelbarrow when the wheelbarrow is in a dumping position, the front dump roll cage being spaced apart from a front portion of the load carrying portion by a distance; and
at least one wheel connected to the frame.

11. The wheelbarrow as in claim 8 or 10, wherein the front dump roll cage is sized and configured to space the load carrying portion apart from the support surface by at least about four inches when the wheelbarrow is in the dumping position.

12. The wheelbarrow as in claim 8 or 10, wherein the front dump roll cage is sized and configured to space the load carrying portion apart from the support surface by at least about six inches when the wheelbarrow is in the dumping position.

13. The wheelbarrow as in any preceding claim, wherein the at least one wheel comprises a first wheel disposed at least proximate a central portion of the load carrying portion; and a second wheel disposed at least proximate the central portion of the load carrying portion.

14. The wheelbarrow as in any preceding claim, wherein at least a portion of the handle is aligned with an axis that is offset from the base; and wherein the load carrying portion has a capacity, a portion of the capacity of the load carrying portion being disposed below the frame and a portion of the capacity of the load carrying portion being disposed above the frame.

15. The wheelbarrow as in any preceding claim, wherein at least about five litres of the capacity of the load carrying portion is disposed below the frame; and wherein at least about five litres of the capacity of the load carrying portion is disposed above the frame.
